# EUROPEAN PATENT APPLICATION

(11) **EP 4 369 539 A1**
(43) Date of publication of application: **15.05.2024**
(21) Application number: 23206801.5
(22) Date of filing: 30.10.2023
(51) Int. Cl.: H02B 1/052

(54) **DEVICE FOR ATTACHING A CASE TO A DIN RAIL AND CASE WITH SUCH A DEVICE**

(30) Priority: 08.11.2022 IT 202200023001
(71) Applicant: Italtronic S.r.l., 35127 Padova (IT)
(72) Inventor: RIGATO, Nicola, 35020 ALBIGNASEGO PD (IT); BUSO, Edoardo, 35010 VIGODARZERE PD (IT); FAVARO, Roberto, 35010 SAN GIORGIO DELLE PERTICHE PD (IT)
(74) Representative: Modiano, Micaela Nadia

(57) **Abstract**

A device (10, 110) for attaching a case (11, 111) to a DIN rail (12, 112), the device (10, 110) comprising a body (13, 113) having at least two coupling portions (14a, 14b, 114a, 114b) to the DIN rail (12, 112).

The device (10, 110) comprises means (15, 115) for the simultaneous retraction of the coupling portions (14a, 14b, 114a, 114b).

## Description

The present invention relates to a device for attaching a case to a DIN rail.

The invention also relates to a case with such a device.

The invention is used in industry, in the sector of electrical or electronic products.

In particular the invention can be applied in coupling instruments or electric apparatuses to a DIN rail of omega (Ω) type.

In the present description, the expression "DIN rail of omega type" means the DIN rail according to the standard defined by the IEC/EN 60715 standard.

Nowadays, DIN rails are widely used for the wall installation of instruments or electric apparatuses, such as electrical switchboards, power supplies, programmable logic controllers (PLCs), etc.

Among the various types of DIN rail, the omega type of rail has a transverse cross-section profile shaped like an omega, or "Ω", and is constituted by:
- a longitudinal central portion with a C-shaped transverse cross-section, adapted to be fixed to a wall,
- two opposite and mirror-symmetrical longitudinal appendages, each one extending from the free end of a respective wing of the C-shaped central portion, perpendicularly to the latter.

Usually, electronic apparatuses have a containment case which is associated with the DIN rail by means of a fixing device, which is present on the wall of the case that is directed toward the DIN rail.

Such fixing device, generally, has a body that is shaped complementarily to the DIN rail and/or is provided with two coupling portions, each one designed to be coupled to a respective appendage of the DIN rail.

In particular:
- one of the two coupling portions is fixed,
- while the other coupling portion can move/is retractable and is fitted with elastic return means to keep it in the coupled configuration, if inactive.

Such conventional techniques have a number of drawbacks.

In fact, in order to be able to fix an apparatus to the DIN rail it is necessary to couple the first, fixed coupling portion to the corresponding appendage of the DIN rail and then rotate the case, at least partially, in order to bring the second coupling portion, the one that can move/is retractable, to be coupled to the other appendage of the DIN rail.

Normally, the coupling portion that can move/is retractable is fixed by snap action to the corresponding appendage of the DIN rail.

Similarly, if an apparatus is to be removed from a DIN rail, it is necessary to retract the coupling portion that can move/is retractable in order to uncouple it from the corresponding appendage of the DIN rail, and then rotate the case, at least partially, in order to also uncouple the other (fixed) coupling portion from the corresponding appendage of the DIN rail.

This results in bothersome coupling/uncoupling operations, and the need to perform at least two operations in order to couple/uncouple an apparatus to/from the DIN rail.

Furthermore, it is not possible, with coupling devices of this type, to couple/uncouple the case to/from the DIN rail by moving close/removing it at right angles to the plane of arrangement of the latter, and without the need for rotation.

Also, it is not possible with coupling devices of this type to couple/uncouple the case to/from the DIN rail by simultaneously coupling/uncoupling the two coupling portions to/from the corresponding appendages of the DIN rail.

This results in the need for ample maneuvering space for the coupling/uncoupling operations and a considerable expenditure of time, especially when it is necessary to couple/uncouple more than one case.

The aim of the present invention is to provide a device for attaching a case to a DIN rail and a case with such a device, that are capable of improving the known art in one or more of the above-mentioned aspects.

Within this aim, an object of the invention is to provide a device for attaching a case to a DIN rail that makes it possible to couple/uncouple the case to/from the DIN rail by moving close/removing it at right angles to the plane of arrangement of the latter, and without the need for rotation.

Another object of the invention is to provide a device for attaching a case to a DIN rail that makes it possible to couple/uncouple the case to/from the DIN rail by simultaneously coupling/uncoupling the coupling portions to/from the corresponding appendages of the DIN rail.

Another object of the invention is to provide a case with a device that is capable of achieving the above-mentioned objects.

Furthermore, another object of the present invention is to overcome the drawbacks of the known art in an alternative manner to any existing solutions.

Not least an object of the invention is to provide a device for attaching a case to a DIN rail and a case with such a device, that are highly reliable, easy to implement, and at low cost.

This aim and these and other objects which will become better apparent hereinafter are achieved by a device for attaching a case to a DIN rail, said device comprising a body having at least two coupling portions to said DIN rail, said device being characterized in that it comprises means for the simultaneous retraction of said coupling portions.

This aim and these and other objects which will become more apparent hereinafter are achieved by a case with such a device.

Further characteristics and advantages of the invention will become more apparent from the description of some preferred, but not exclusive, embodiments of the device for attaching a case to a DIN rail and of the case with such a device, according to the invention, which are illustrated for the purposes of non-limiting example in the accompanying drawings wherein:

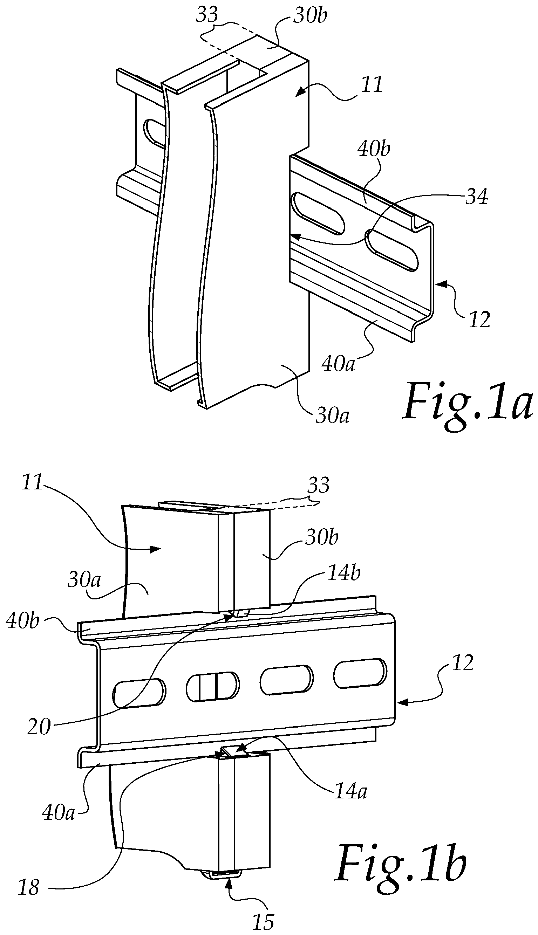

- Figures 1a and 1b are two different views of a configuration for use of a device for attaching a case to a DIN rail and a case with such a device, according to the invention;

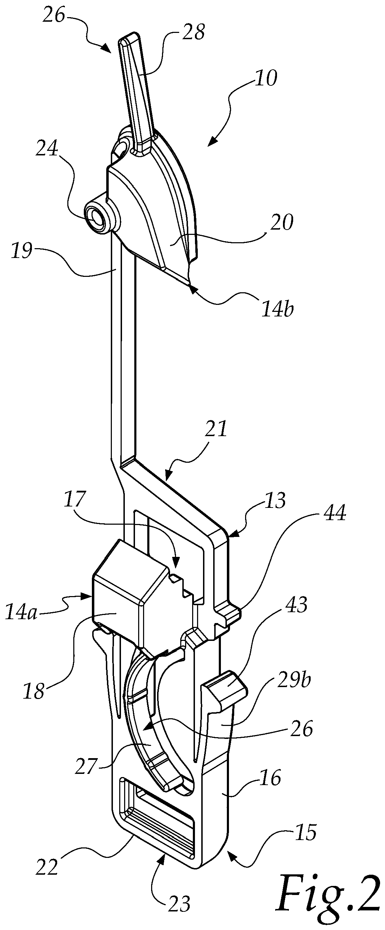

- Figure 2 is a perspective view of a device for attaching a case to a DIN rail, according to the invention, in a first embodiment thereof;

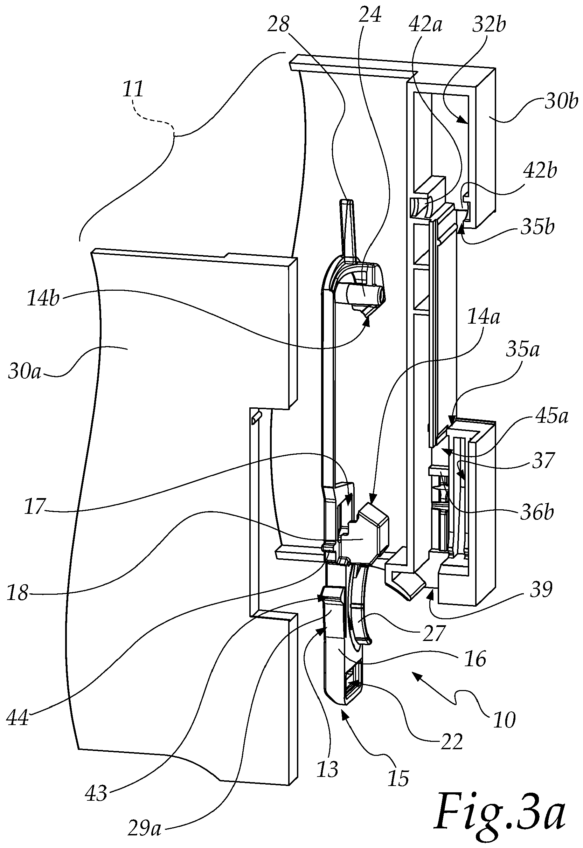

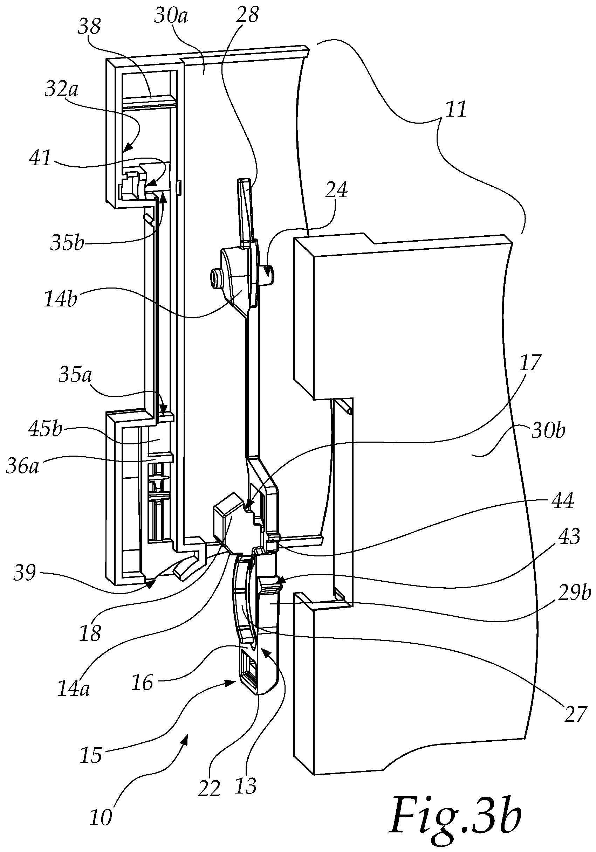

- Figures 3a and 3b are two different exploded views of the device of Figure 2, in an application of use thereof;

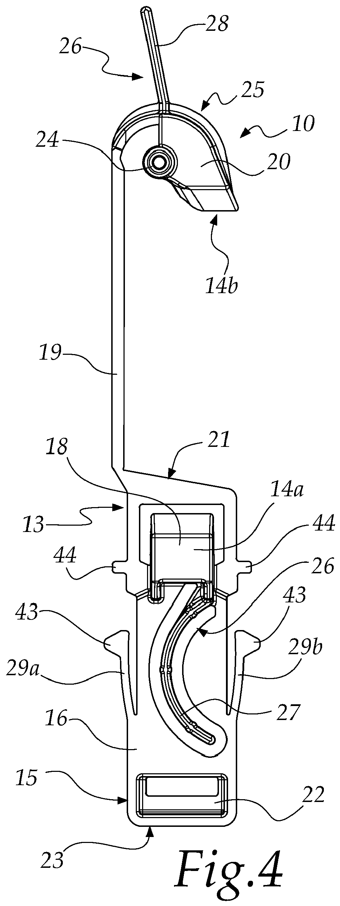

- Figure 4 is a front elevation view of the device of Figure 2;
- Figure 5 is a partial and perspective view of the device of Figure 2 in a first configuration for use;
- Figures 6a and 6b are two different cross-sectional views of the device of Figure 2 in its first configuration for use;
- Figure 7 is a partial and perspective view of the device of Figure 2 in a second configuration for use;
- Figures 8a and 8b are two different cross-sectional views of the device of Figure 2 in its second configuration for use;
- Figure 9 is a perspective view of a device for attaching a case to a DIN rail, according to the invention, in a second embodiment thereof;
- Figure 10 is a perspective view of the device of Figure 9, in an application of use thereof;
- Figures 11a and 11b are two different exploded views of the application of Figure 10;
- Figure 12 is a front elevation view of the device of Figure 9,
- Figure 13 is a partial and perspective view of the device of Figure 9 in a first configuration for use;
- Figure 14 is a cross-sectional view of the device of Figure 9 in its first configuration for use;
- Figure 15 is a partial and perspective view of the device of Figure 9 in a second configuration for use;
- Figure 16 is a cross-sectional view of the device of Figure 9 in its second configuration for use.

With reference to the figures, a device for attaching a case to a DIN rail according to the invention, in a first embodiment thereof, is generally designated by the reference numeral 10.

The device 10 is used in a case 11, coupled to a DIN rail 12, of the omega type.

In particular, the device 10 comprises a body 13 having at least two coupling portions 14a, 14b to the DIN rail 12.

One of the peculiarities of the device 10 consists in that it comprises means 15 for the simultaneous retraction of the coupling portions 14a, 14b.

Another peculiarity of the invention consists in that the device 10 is provided in a single piece, of plastic and/or metallic material such as for example polyamide.

Specifically, the body 13 of the device 10 has a longitudinal extension and comprises:
- a substantially flat region 16,
   a first coupling portion 14a, extending from a first surface of the region 16, constituted by a recess 17 and a first tooth 18,
- an elongated element 19 which is connected:
- at a first end thereof, to the first coupling portion 14a,
- at a second end thereof, to a second coupling portion 14b,
- such second coupling portion 14b is constituted by a second tooth 20 extending substantially on the same plane of arrangement as the first tooth 18 and directed toward the latter.

The first coupling portion 14a is arranged proximate to/at a first end 21 of the substantially flat region 16, and the elongated element 19 extends starting from that same first end 21 of the region 16 proximate to/at one of its longitudinal lateral edges.

Such means 15 for the simultaneous retraction of the coupling portions 14a, 14b comprise:
- a grip element 22 arranged at a second end 23 of the substantially flat region 16,
- such elongated element 19,
- a pivot 24 extending proximate to/at the second coupling portion 14b in a direction substantially perpendicular to the plane of arrangement of the second tooth 20.

Advantageously, the second tooth 20 rotates about the pivot 24 during the retraction/excursion step of the second coupling portion 14b.

In particular, the grip element 22 is constituted by a slot which can be manipulated with the tip of a screwdriver or similar tool.

Such grip element 22 constitutes a first longitudinal end of the body 13, which has, in turn, a rounded profile at a second longitudinal end 25 thereof, opposite to said first longitudinal end, and the second coupling portion 14b proximate to/at that end.

The device 10 comprises elastic return means 26.

Such elastic return means 26 comprise:
- a first leaf spring 27, crescent-shaped, extending from the first tooth 18 in the direction of the grip element 22 and lying on the same plane of arrangement as the first tooth 18,
- a second leaf spring 28, constituted by an elongated appendage extending from the second longitudinal end 25 of the device 10.

The body 13 also has:
- two opposite and mirror-symmetrical first tabs 29a, 29b, along the longitudinal edges of the substantially flat region 16, each one of which has a terminal raised portion 43, which are adapted to lock the body 13 during the retraction step,
- two opposite and mirror-symmetrical first raised portions 44, along the longitudinal edges of the substantially flat region 16, which are adapted to cause an interference with the case 11 and to limit the stroke of the body 13.

The present invention also relates to a case 11 which is provided with such a device.

The case 11 comprises two half-shells:
- a first half-shell 30a,
- a second half-shell 30b.

Such case 11 has a region 33 for association with the DIN rail 12 that is at least partially complementarily shaped thereto, and has, in such region 33 for association with the DIN rail 12, a housing 31 for the device 10.

In particular, the housing 31 defines a first indentation 34 which is complementarily shaped to the DIN rail 12.

Such housing 31 is defined by the association of two opposite and complementary seats:
- a first seat 32a, in the first half-shell 30a,
- a second seat 32b, in the second half-shell 30b.

Advantageously, the first indentation 34 has two opposite first openings 35a, 35b, each one adapted to allow the retraction/excursion movement of a respective tooth 18, 20.

The first seat 32a and the second seat 32b each have a second raised portion 36a, 36b, for the abutment/interference of a respective terminal raised portion 43 of a corresponding one of such first tabs 29a, 29b.

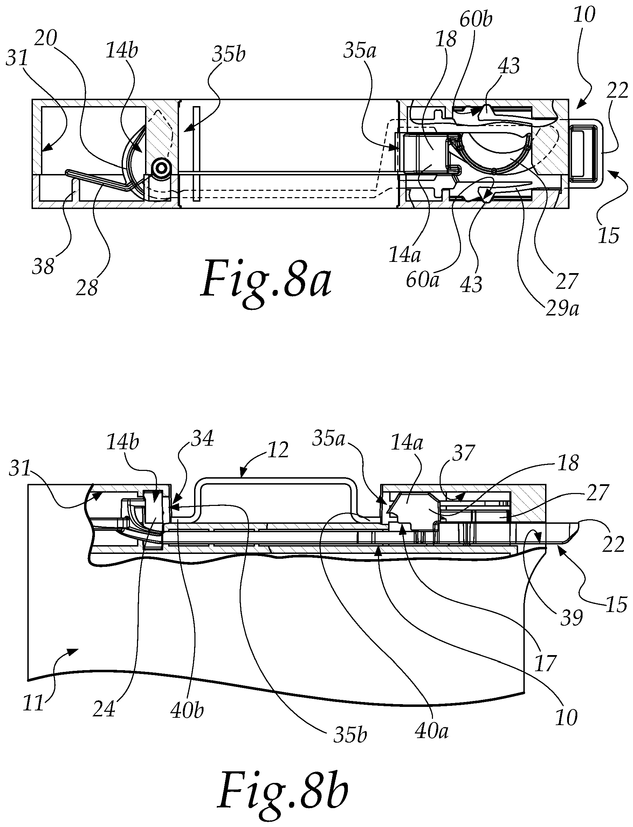

Furthermore, the first seat 32a and the second seat 32b each have a cavity 60a, 60b for the interlocking/interference of a respective terminal raised portion 43 in order to maintain the device 10 in the release configuration, as shown in Figure 8a.

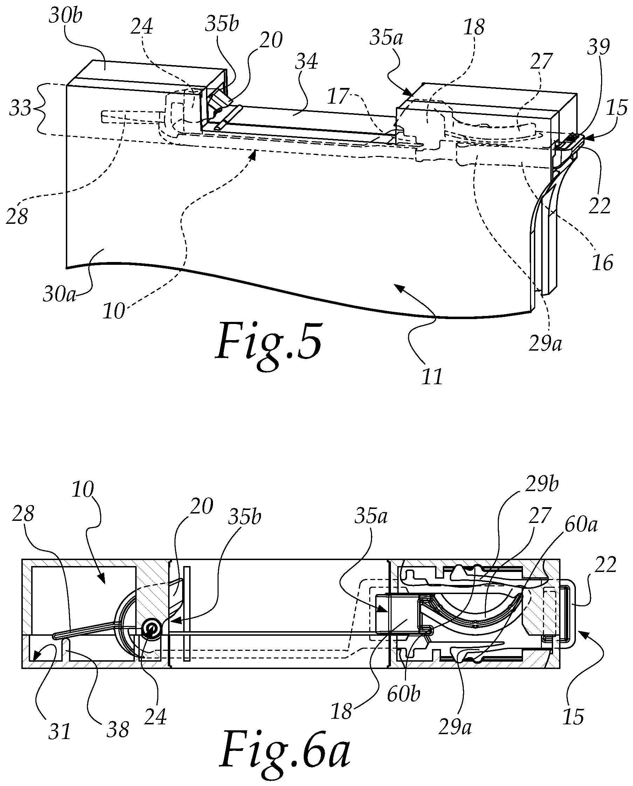

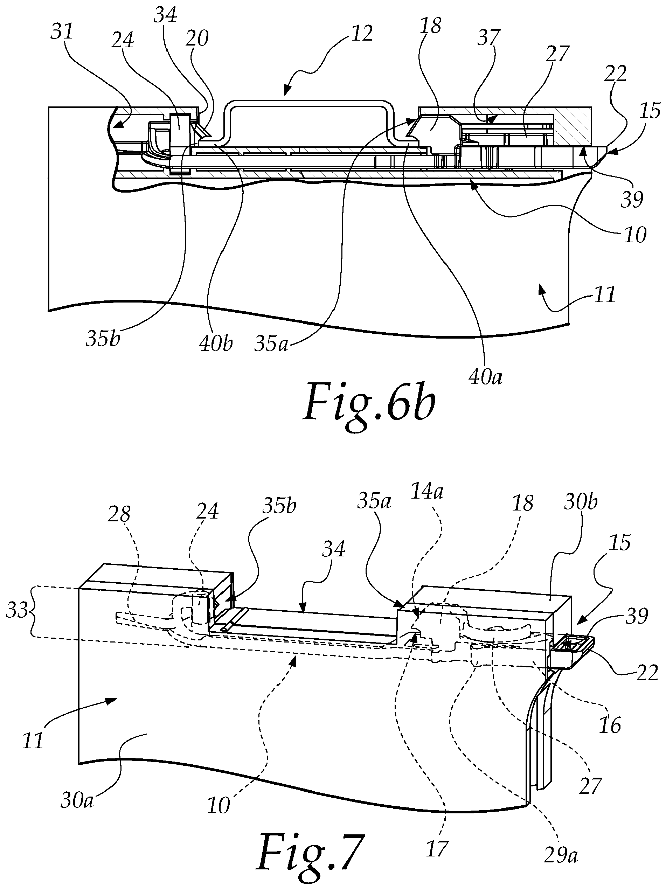

In order to be able to return the device 10 to the coupling configuration, as shown in Figure 6a, and release the terminal raised portion 43 from the corresponding cavity 60a, 60b, it is necessary to push the body 13 so that it reenters the case 11, by acting on the grip portion 22.

The first seat 32a and the second seat 32b each have a first cavity 45a, 45b for inserting a corresponding one of such first raised portions 44.

Such second seat 32b has a second cavity 37 for the housing/abutment of the first leaf spring 27.

Such first seat 32a has a third raised portion 38 for the abutment of the second leaf spring 28.

The housing 31 has a second opening 39, substantially parallel to the first openings 35a, 35b, for the passage of the grip element 22.

The first seat 32a has a fourth raised portion 41 for the abutment of the pivot 24, which is shaped complementarily thereto, and the second seat 32b has two opposite recesses 42a, 42b for the insertion of the ends of the pivot 24, which are shaped complementarily thereto.

The use of the device 10 and of the case 11, according to the invention, is the following and is shown schematically in Figures 5 to 8b.

Starting from the configuration shown in Figure 5, when it is desired to fix the case 11 to the DIN rail 12, it is sufficient to move it close to the DIN rail 12 in a direction at right angles to the plane of arrangement of the latter, so as to insert the DIN rail 12 in the first indentation 34 of the housing 31.

At this point, by applying a slight pressure on the case 11 in the direction of the DIN rail 12, simultaneously:
- the first tooth 18 retreats into its corresponding first opening 35a,
- the second tooth 20 retreats into the corresponding first opening 35b, by virtue of the rotation about the pivot 24.

Then, again simultaneously:
- the first tooth 18 exits from its corresponding first opening 35a, so coupling by snap action to the corresponding longitudinal appendage 40a of the DIN rail 12, by virtue of the elastic return of the first leaf spring 27,
- the second tooth 20 exits from its corresponding first opening 35b, in so doing coupling by snap action to the corresponding longitudinal appendage 40b of the DIN rail 12, by virtue of the elastic return of the second leaf spring 28 which causes a rotation of the second tooth 20 about the pivot 24 in the opposite direction to the previous rotation.

To decouple the case 11 from the DIN rail 12, it is sufficient to grasp the gripping element 22 and extract it from the second opening 39.

At this point, simultaneously:
- the first tooth 18 retreats inside the corresponding first opening 35a, by virtue of the sliding of the substantially flat region 16, in so doing freeing the respective longitudinal appendage 40a of the DIN rail 12,
- the second tooth 20 retreats inside the corresponding first opening 35b, by virtue of the sliding of the elongated element 19, connected to the substantially flat region 16, which causes a rotation of the second tooth 20 about the pivot 24, in so doing freeing the respective longitudinal appendage 40b of the DIN rail 12, and simultaneously the terminal raised portions 43 of the tabs 29a, 29b are inserted in the corresponding cavities 60a, 60b.

Then the case 11 is taken away from the DIN rail 12 in a direction at right angles to the plane of arrangement of the latter.

It should be noted that, when using a device 10 and a case 11, it is not necessary to perform a rotation of the case 11 in order to couple/uncouple the latter to/from the DIN rail 12, and this enables coupling/uncoupling even in tight spaces.

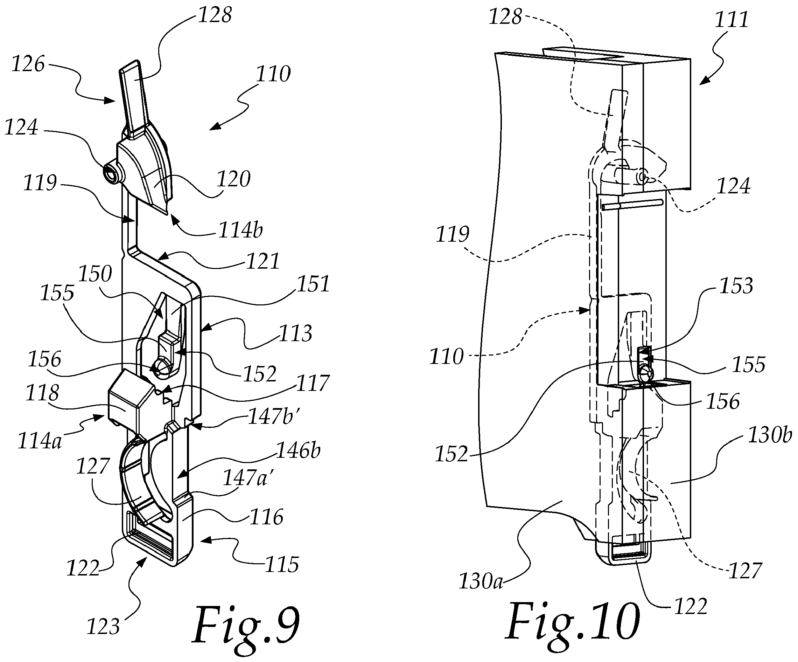

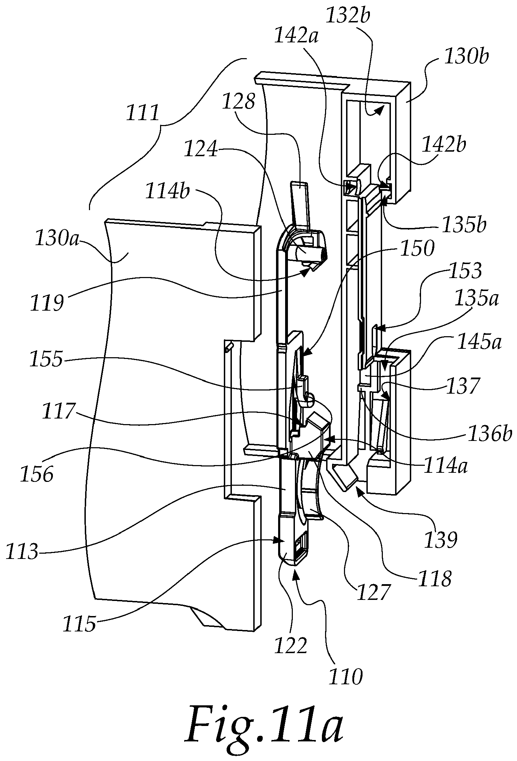

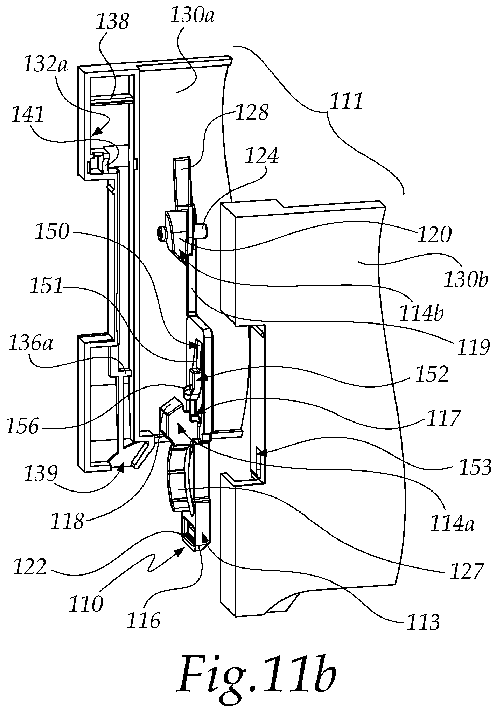

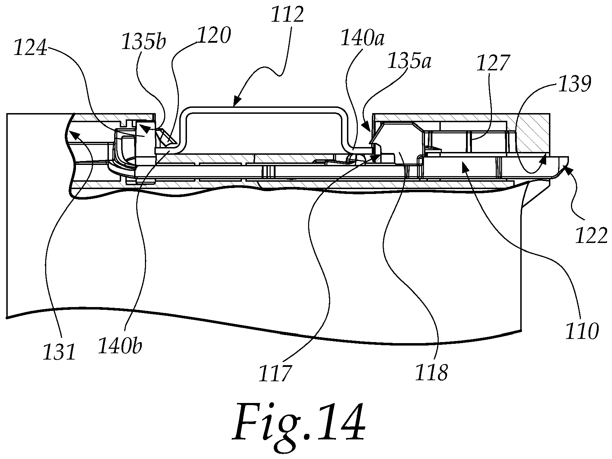

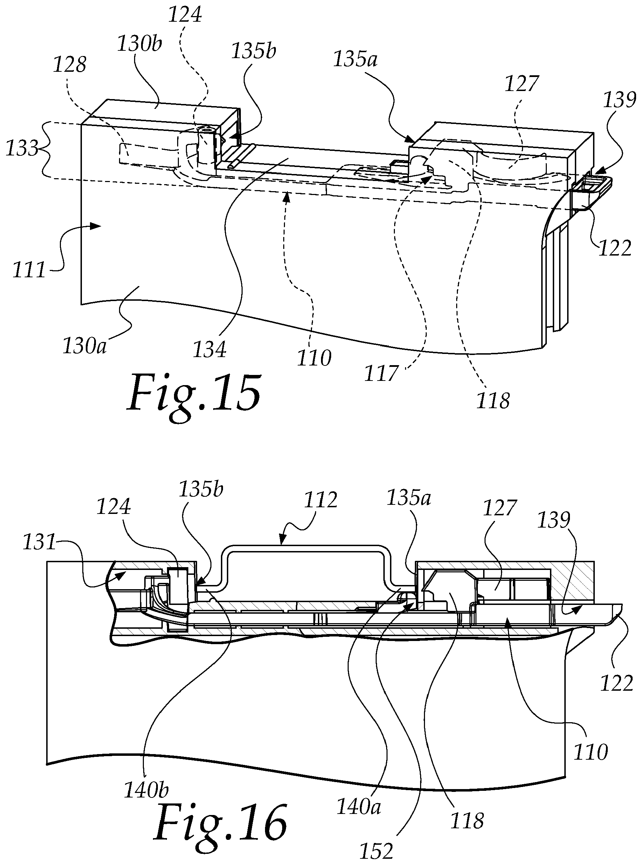

Figures 9 to 16 show a device 110 for attaching a case 111 to a DIN rail 112 according to the invention, in a second embodiment.

In the drawings, the elements of the device 110 and of the case 111 that are analogous to those of the first embodiment illustrated above are designated for the sake of simplicity with the same number, increased by 100.

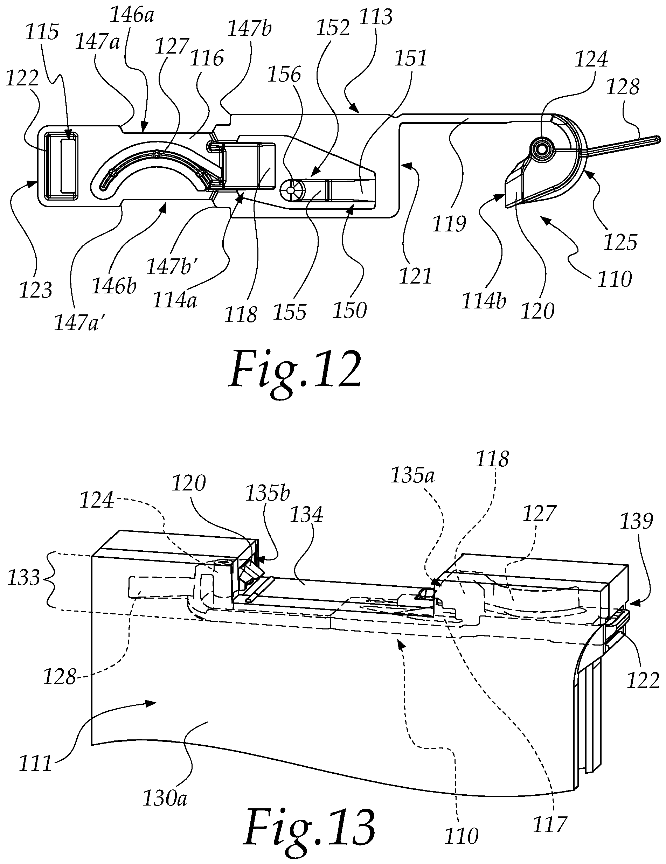

Instead of the first tabs and the first raised portions of the first embodiment, in the second embodiment there are two opposite and mirror-symmetrical second indentations 146a, 146b, along the longitudinal edges of the substantially flat region 116, each one defined by two subsequent stepped edges, respectively 147a, 147b, 147a', 147b', of which at least one of the two advantageously has a step-like profile (stepped edges 147b, 147b' in Figure 12).

Moreover, in such second embodiment, the device 110 has means 150 for automatically maintaining the release configuration.

Such means 150 for automatically maintaining the release configuration comprise a second tab 151, which has a fifth raised portion 152 which is adapted to be inserted by snap action into a corresponding hole 153 of the case 111, located on the longitudinal surface of the first indentation 134 of the latter.

Specifically the fifth raised portion 152 has a step-like portion 155 from which a pin 156 extends.

Advantageously, such first hole 153 is arranged in the second half-shell 130b.

In particular, the second tab 151 is located in the substantially flat region 116 of the body 113, between the first coupling portion 114a and the first end 121 of said region 116.

Such second tab 151 has an axis of extension substantially parallel to the axis of extension of the device 110 with the fifth raised portion 152 arranged toward such first coupling portion 114a, and with an extension that is substantially perpendicular to the plane of arrangement of such substantially flat region 116.

The use of the device 110 and of the case 111 is similar to that of the device and of the case in the first embodiment illustrated previously.

The operation of the means 150 for automatically maintaining the release configuration is the following.

To decouple the case 111 from the DIN rail 112, grasp the gripping element 122 and extract it from the second opening 139.

At this point, simultaneously:
- the first tooth 118 retreats inside the corresponding first opening 135a, by virtue of the sliding of the substantially flat region 116, thus freeing the respective longitudinal appendage 140a of the DIN rail 112,
- the second tooth 120 retreats inside the corresponding first opening 135b, by virtue of the sliding of the elongated element 119, connected to the substantially flat region 116, which causes a rotation of the second tooth 120 about the pivot 124, thus freeing the respective longitudinal appendage 140b of the DIN rail 112,
- the fifth raised portion 152 is inserted in the first hole 153, by virtue of the sliding of the substantially flat region 116 and of the outward push of the second tab 151, thus causing a stable interference between the device 110 and the case 111, while at the same time maintaining the device 110 in a stable release configuration.

During coupling, the corresponding longitudinal appendage 140a of the DIN rail 112, by pressing on the pin 156 of the fifth raised portion 152, pushes it inside the first hole 153, thus allowing the uncoupling and causing the automatic coupling of the device 10 by virtue of the elastic return of the flat springs 127, 128, which cause the sliding of the body 113 of the device 110, with the consequent excursion of the first tooth 118 and of the second tooth 120, so as to lock the corresponding longitudinal appendages 140a, 140b of the DIN rail 112.

It should be noted that, as in the previous embodiment, when using a device 110 and a case 111, it is not necessary to perform a rotation of the case 111 in order to couple/uncouple the latter to/from the DIN rail 112, and this enables coupling/uncoupling even in tight spaces.

In practice it has been found that the invention fully achieves the intended aim and objects by providing a device for attaching a case to a DIN rail that makes it possible to couple/uncouple the case to/from the DIN rail by moving close/removing it at right angles to the plane of arrangement of the latter, and without the need for rotation.

According to the invention a device has been provided for attaching a case to a DIN rail that makes it possible to couple/uncouple the case to/from the DIN rail by simultaneously coupling/uncoupling the coupling portions to/from the corresponding appendages of the DIN rail.

Furthermore, according to the invention a case has been devised which is provided with a device capable of achieving the above-mentioned objects.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102022000023001 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A device (10, 110) for attaching a case (11, 111) to a DIN rail (12, 112), said device (10, 110) comprising a body (13, 113) having at least two coupling portions (14a, 14b, 114a, 114b) for coupling to said DIN rail (12, 112), said device (10, 110) being **characterized in that** it comprises means (15, 115) for the simultaneous retraction of said coupling portions (14a, 14b, 114a, 114b).

2. The device (10, 110) according to claim 1, **characterized in that** it is provided in a single piece.

3. The device (10, 110) according to claim 1, **characterized in that** said body (13, 113) has a longitudinal extension and comprises:
- a substantially flat region (16, 116),
a first said coupling portion (14a, 114a), extending from a first surface of said substantially flat region (16, 116), constituted by a recess (17, 117) and a first tooth (18, 118),
- an elongated element (19, 119) which is connected:
- at a first end thereof, to said first coupling portion (14a, 114a),
- at a second end thereof, to a second said coupling portion (14b, 114b),
- said second coupling portion (14b, 114b), constituted by a second tooth (20, 120), extending substantially on the same plane of arrangement as said first tooth (18, 118) and directed toward the latter.

4. The device (10) according to claim 3, **characterized in that** said first coupling portion (14a) is arranged proximate to/at a first end (21) of the substantially flat region (16).

5. The device (10, 110) according to one or more of the preceding claims, **characterized in that** said elongated element (19, 119) extends from said first end (21, 121) of said substantially flat region (16, 116) proximate to/at one of its longitudinal lateral edges.

6. The device (10, 110) according to one or more of the preceding claims, **characterized in that** said means (15, 115) for the simultaneous retraction of said coupling portions (14a, 14b, 114a, 114b) comprise:
- a grip element (22, 122) arranged at a second end (23, 123) of said substantially flat region (16, 116),
- said elongated element (19, 119),
- a pivot (24, 124) extending proximate to/at said second coupling portion (14b, 114b) in a direction substantially perpendicular to the plane of arrangement of said second tooth (20, 120).

7. The device (10, 110) according to one or more of the preceding claims, **characterized in that** said grip element (22, 122) is constituted by a slot and constitutes a first longitudinal end of said body (13, 113).

8. The device (10, 110) according to one or more of the preceding claims, **characterized in that** said body (13, 113) has a rounded profile at a second longitudinal end thereof (25, 125) that is opposite said first longitudinal end of said body (13, 113), said second coupling portion (14b, 114b) being proximate to/at said second longitudinal end (25, 125).

9. The device (10, 110) according to one or more of the preceding claims, **characterized in that** it comprises elastic return means (26, 126), comprising:
- a first leaf spring (27, 127), crescent-shaped, extending from said first tooth (18, 118) in the direction of said grip element (22, 122) and lying on the same plane of arrangement as said first tooth (18, 118),
- a second leaf spring (28, 128), constituted by an elongated appendage extending from said second longitudinal end (25, 125) of said device (10, 110).

10. The device (10) according to one or more of the preceding claims, **characterized in that** it has:
- two opposite and mirror-symmetrical first tabs (29a, 29b) along the longitudinal edges of said substantially flat region (16), each one of said first tabs (29a, 29b) being provided with a terminal raised portion (43),
- two opposite and mirror-symmetrical first raised portions (44) along the longitudinal edges of said substantially flat region (16).

11. The device (110) according to one or more of claims 1 to 9, **characterized in that** it has two opposite and mirror-symmetrical second indentations (146a, 146b) along the longitudinal edges of said substantially flat region (116), each one defined by two successive stepped edges (147a, 147b, 147a', 147b').

12. The device (10, 110) according to one or more of claims 1 to 9 and 11, **characterized in that** it has means (29a, 29b, 150) for automatically maintaining the release configuration.

13. The device (10) according to the preceding claim, **characterized in that** said means for automatically maintaining the release configuration comprise said first tabs (29a, 29b) and said terminal raised portion (43).

14. The device (110) according to claim 12, **characterized in that** said means (150) for automatically maintaining the release configuration comprise a second tab (151) provided with a fifth raised portion (152), said fifth raised portion (152) having a step-like portion (155) from which a pin (156) extends.

15. The device (110) according to the preceding claim, **characterized in that** said second tab (151) is located in said substantially flat region (116) of said body (113) between said first coupling portion (114a) and said first end (121) of said substantially flat region (116), said second tab (151) having an axis of extension that is substantially parallel to the axis of extension of said device (110) with said fifth raised portion (152) arranged toward said first coupling portion (114a) and with an extension that is substantially perpendicular to the plane of arrangement of said substantially flat region (116).

16. A case (11, 111), **characterized in that** it comprises a device (10, 110) according to one or more of the preceding claims.

17. The case (11, 111) according to the preceding claim, **characterized in that** it comprises two half-shells:
- a first half-shell (30a, 130a),
- a second half-shell (30b, 130b).

18. The case (11, 111) according to claim 16 or 17, **characterized in that** it has a region (33, 133) for association with said DIN rail (12, 112) that is at least partially shaped complementarily thereto, said case (11, 111) having in said region (33, 133) for association with said DIN rail (12, 112) a housing (31, 131) for said device (10, 110).

19. The case (11, 111) according to one of claims 16 to 18, **characterized in that** said housing (31, 131) defines a first indentation (34, 134) which is shaped complementarily to said DIN rail (12, 112), said housing (31, 131) being defined by the association of two opposite and complementary seats:
- a first seat (32a, 132a) in said first half-shell (30a, 130a),
- a second seat (32b, 132b) in said second half-shell (30b, 130b).

20. The case (11, 111) according to one of claims 16 to 19, **characterized in that** said first indentation (34, 134) has two opposite first openings (35a, 35b, 135a, 135b), each one adapted to allow the retraction/excursion movement of a respective tooth (18, 20, 118, 120).

21. The case (11, 111) according to one of claims 16 to 20, **characterized in that** said second seat (32b, 132b) has a cavity (37, 137) for the housing/abutment of said first leaf spring (27, 127).

22. The case (11, 111) according to one of claims 16 to 21, **characterized in that** said first seat (32a, 132a) has a third raised portion (38, 138) for the abutment of said second leaf spring (28, 128).

23. The case (11, 111) according to one of claims 16 to 22, **characterized in that** said housing (31, 131) is provided with a second opening (39, 139) which is substantially parallel to said first openings (35a, 35b, 135a, 135b) for the passage of said grip element (22, 122).

24. The case (11, 111) according to one of claims 16 to 23, **characterized in that**:
- said first seat (32a, 132a) has a fourth raised portion (41, 141) for the abutment of said pivot (24, 124) which is shaped complementarily thereto,
- said second seat (32b, 132b) has two opposite recesses (42a, 42b, 142a, 142b) for the insertion of the ends of said pivot (24, 124) which are shaped complementarily thereto.
